# EUROPEAN PATENT SPECIFICATION

(11) **EP 2 306 554 B1**
(45) Date of publication and mention of the grant of the patent: **11.09.2013**
(21) Application number: 10251699.4
(22) Date of filing: 30.09.2010
(51) Int. Cl.: H01M 2/26, H01M 2/30, H01M 10/0585

(54) **Secondary battery and method of fabricating secondary battery**
Sekundärbatterie und Verfahren zur Herstellung einer Sekundärbatterie
Batterie secondaire et son procédé de fabrication

(30) Priority: 01.10.2009 KR 20090093802; 09.09.2010 KR 20100088327
(43) Date of publication of application: 06.04.2011
(73) Proprietor: Samsung SDI Co., Ltd., Yongin-si, Gyeonggi-do (KR)
(72) Inventor: Jo, Yunk-Yung, Yongin-si Gyeonggi-do (KR); Kim, Chan-Jung, Yongin-si Gyeonggi-do (KR); Son, Suk-Jung, Yongin-si Gyeonggi-do (KR); Jang, Mi-Young, Yongin-si Gyeonggi-do (KR)
(74) Representative: Mounteney, Simon James

(56) References cited:
- EP-A1- 2 139 057
- EP-A2- 1 641 057
- WO-A1-2008/010656
- CN-Y- 2 924 795
- JP-A- 61 034 857
- US-A1- 2002 146 620
- US-A1- 2006 115 722
- US-A1- 2007 117 009
- US-A1- 2009 169 991
- US-B2- 7 541 112

## Description

### BACKGROUND

### 1. Field

The present invention relates to a secondary battery and a method of fabricating the secondary battery.

### 2. Description of the Related Art

With the trend for lightweight and high functionality portable electronic appliances such as video cameras, mobile phones, and portable computers, research is actively being carried out on secondary batteries to function as power sources of the portable appliances. Secondary batteries include nickel-cadmium batteries, nickel-hydrogen batteries, nickel-zinc batteries, and lithium ion batteries. Of these, the lithium ion secondary batteries are particularly adapted for miniaturization and high capacity. In addition, since the lithium ion secondary batteries have high operation voltages and high energy density per unit weight, such batteries are widely used in high-end electronic appliances.

A lithium ion battery typically takes the form of a battery pack that includes a battery cell, a circuit module, and a cover. The battery cell includes an electrode assembly, a can, and a cap assembly. The electrode assembly includes a positive electrode plate, a negative electrode plate, and a separator. The can accommodates the electrode assembly. The cap assembly seals the can. The circuit module includes a protective circuit device and is coupled to the battery cell. The cover covers the circuit module.
JP61034857 discloses a battery of the related art.

### SUMMARY

The present invention sets out to provide a secondary battery and a method of fabricating the secondary battery, which substantially overcome one or more problems due to the limitations and disadvantages of the related art and is disclosed in the claims.

In particular, the invention sets out to provide a secondary battery and a method of fabricating the secondary battery which prevent an electrode plate from being damaged when an electrode tab is coupled to the electrode plate.

At least one of the above and other features and advantages may be realized by providing a secondary battery including: an electrode assembly including an electrode plate and a separator, the electrode plate including a positive electrode plate coupled with a positive electrode tab and a negative electrode plate coupled with a negative electrode tab, wherein at least one of the positive electrode tab and the negative electrode tab is coupled to a non-coating portion of the electrode plate, to which a coating portion is not applied, has an end surround by a protective member, and a region exposed out of the protective member and coupled to the non-coating portion.

The protective member may be provided with a welding hole configured to weld one of the positive electrode tab and the negative electrode tab.

An adhesive may be disposed on a lower surface of the protective member to adhere the protective member to a collector of the electrode plate.

The protective member may surround a lower surface disposed at an edge of one of the positive electrode tab and the negative electrode tab.
The protective member may include: a first protective member disposed on an upper portion of at least one of the positive electrode tab and the negative electrode tab; and a second protective member coupled to a lower portion of the first protective member to surround at least one of the positive electrode tab and the negative electrode tab between the first and second protective members. The protective member may be formed of a tape, or be formed through molding.

The protective member may have a curved surface at a corner coupled to the non-coating portion.

The electrode assembly may have a jelly roll shape in which the positive electrode plate, the separator, and the negative electrode plate are stacked and wound, and the positive electrode tab may be spaced apart from the negative electrode tab.

Each of the positive electrode plate, the separator, and the negative electrode plate may be provided in plurality, the electrode assembly may have a stack structure in which the positive electrode plates, the separators, and the negative electrode plates are stacked, and the positive electrode tabs of the positive electrode plates and the negative electrode tabs of the negative electrode plates may be collected according to poles, so as to respectively form electrode terminals.

The electrode terminal of the positive electrode tabs may be formed by bending one of the positive electrode tabs to surround the others of the positive electrode tabs, and the electrode terminal of the negative electrode tabs may be formed by bending one of the negative electrode tabs to surround the others of the negative electrode tabs.

The bent tabs may be the uppermost or lowermost one of the positive electrode tabs and the uppermost or lowermost one of the negative electrode tabs.

The bent tab may have a length greater than those of the others of the tabs.

The bent tab may have a thickness greater than those of the others of the tabs.

At least one of the above and other features and advantages may be realized by providing a method of fabricating a secondary battery including an electrode assembly including an electrode plate and a separator, the electrode plate including a positive electrode plate coupled with a positive electrode tab and a negative electrode plate coupled with a negative electrode tab, the method including: preparing the positive electrode tab, the negative electrode tab, and a protective member surrounding an end of at least one of the positive electrode tab and the negative electrode tab; welding at least one of the positive electrode tab and the negative electrode tab exposed out of the protective member to a non-coating portion of the electrode plate; and sequentially stacking the positive electrode plate, the separator, and the negative electrode plate.

In the preparing of the electrode tabs and the protective member, a welding hole may be formed in an upper surface of the protective member.

The welding of the electrode tab may be performed at an upper portion of the protective member through the welding hole.
In the preparing of the electrode tabs and the protective member, the protective member may be formed of a tape, or be formed through molding.

In the preparing of the electrode tabs and the protective member, the protective member may have a curved surface at a corner of a portion surrounding the end of at least one of the positive electrode tab and the negative electrode tab.
In the preparing of the electrode tabs and the protective member, the protective member may surround a lower surface disposed at an edge of at least one of the positive and negative electrode tabs.
In the preparing of the electrode tabs and the protective member, the protective member may include: a first protective member disposed on an upper portion of at least one of the positive electrode tab and the negative electrode tab; and a second protective member disposed on a lower portion of the first protective member to surround at least one of the positive electrode tab and the negative electrode tab between the first and second protective members.

The method may further include wounding the positive electrode plate, the negative electrode plate, and the separator to form the electrode assembly after the stacking of the electrode plates and the separator.

The method may further include, after the stacking of the electrode plates and the separator, preparing each of the positive electrode plate, the negative electrode plate, and the separator in plurality to stack the positive electrode plates, the separators, and the negative electrode plates; and collecting and welding the positive electrode tabs of the positive electrode plates and the negative electrode tabs of the negative electrode plates according to poles, so as to respectively form electrode terminals.

The forming of the electrode terminals may include: bending one of the positive electrode tabs to surround the others of the positive electrode tabs; and bending one of the negative electrode tabs to surround the others of the negative electrode tabs.

The forming of the electrode terminals may include bending the uppermost or lowermost one of the positive electrode tabs and the uppermost or lowermost one of the negative electrode tabs.

The forming of the electrode terminals may include bending the positive electrode tab having a length greater than those of the others of the positive electrode tabs and the negative electrode tab having a length greater than those of the others of the negative electrode tabs.

The forming of the electrode terminals may include bending the positive electrode tab having a thickness greater than those of the others of the positive electrode tabs and the negative electrode tab having a thickness greater than those of the others of the negative electrode tabs.

The above and other features of the invention are set out in the appended claims.

### BRIEF DESCRIPTION OF THE DRAWINGS

The above and other features and advantages will become more apparent to those of ordinary skill in the art upon making reference to the following description of embodiments of the invention with reference to the attached drawings, in which:

FIG. 1A is an exploded perspective view illustrating an electrode assembly used in a secondary battery according to an example;

FIG. 1B is an enlarged view illustrating a portion A of FIG. 1A;

FIG. 1C is a cross-sectional view taken along line B-B' of FIG. 1B;

FIG. 2 is a partial cross-sectional view illustrating an electrode assembly used in a secondary battery according to another embodiment of the invention;

FIG. 3 is a partial perspective view illustrating an electrode assembly used in a secondary battery according to another embodiment of the invention;

FIG. 4 is a partial perspective view illustrating an electrode assembly used in a secondary battery according to another embodiment of the invention;

FIG. 5 is a partial perspective view illustrating an electrode assembly used in a secondary battery according to another embodiment of the invention;

FIG. 6 is a partial perspective view illustrating an electrode assembly used in a secondary battery according to another embodiment of the invention;

FIG. 7A is an exploded perspective view illustrating an electrode assembly used in a secondary battery according to another embodiment of the invention;

FIG. 7B is a perspective view illustrating the assembling state of the electrode assembly of FIG. 5A;

FIG. 7C is an enlarged view illustrating a portion C of FIG. 7B;

FIG. 8 is a flowchart illustrating a method of fabricating a secondary battery according to an embodiment of the invention; and

FIG. 9 is a flowchart illustrating a method of fabricating a secondary battery according to another embodiment of the invention.

### DETAILED DESCRIPTION

Embodiments of the invention will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art. Like reference numerals denote like elements throughout.

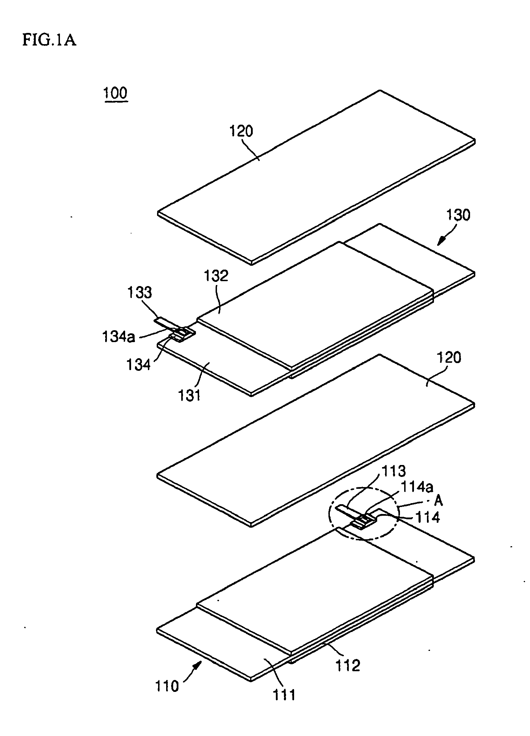

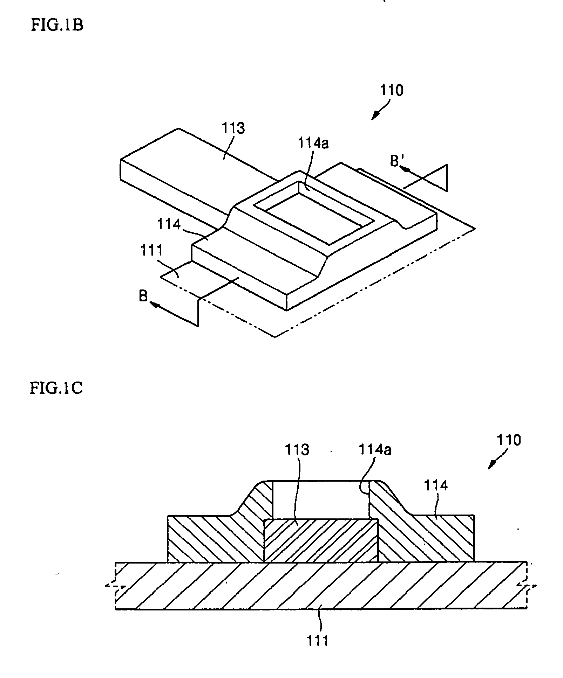

FIG. 1A is an exploded perspective view illustrating an electrode assembly 100 used in a secondary battery according to an example. FIG. 1B is an enlarged view illustrating a portion A of FIG. 1A. FIG. 1C is a cross-sectional view taken along line B-B' of FIG. 1B.

Referring to FIGS. 1A through 1C, the electrode assembly 100 used in the secondary battery according to the current example includes a positive electrode plate 110, separators 120, and a negative electrode plate 130.

The positive electrode plate 110, the separators 120, and the negative electrode plate 130 are sequentially stacked and wound in a jelly roll shape, so as to form the electrode assembly 100. The electrode assembly 100 is wound such that a positive electrode tab 113 of the positive electrode plate 110 and a negative electrode tab 133 of the negative electrode plate 130 protrude upward, which will be described later. In this case, the electrode assembly 100 may be wound such that the positive electrode tab 113 of the positive electrode plate 110 is spaced apart from the negative electrode tab 133 of the negative electrode plate 130.

Hereinafter, the positive electrode plate 110 and the negative electrode plate 130 may be referred to as "electrode plates", and the positive electrode tab 113 of the positive electrode plate 110 and the negative electrode tab 133 of the negative electrode plate 130 may be referred to as "electrode tabs".

The positive electrode plate 110 includes a positive electrode collector 111, positive electrode coating portions 112 disposed on one or more surfaces of the positive electrode collector 111, the positive electrode tab 113 coupled to a surface of the positive electrode collector 111, and a protective member 114 surrounding an end of the positive electrode tab 113.

The positive electrode collector 111, having a thin layer shape, collects electrons generated through a chemical reaction and delivers the electrons to an external circuit. The positive electrode collector 111 may be formed of one of stainless steel, nickel, aluminum, titanium, and alloy thereof, or be formed of an aluminum or stainless steel having a surface treated with carbon, nickel, titanium, or silver.

One or more surfaces of the positive electrode collector 111 are coated with the positive electrode coating portions 112. The positive electrode coating portions 112 may be formed of material, inserting or extracting lithium ions, such as one or more composite oxides of lithium and at least one of cobalt, manganese, and nickel. Portions of the positive electrode collector 111 extend out of the positive electrode coating portions 112 to form non-coating portions.

The positive electrode tab 113 is coupled to the non-coating portion of the positive electrode collector 111. The positive electrode tab 113 may be coupled to the non-coating portion through laser or resistance welding. The positive electrode tab 113 may be formed of aluminum or aluminum alloy, and delivers electrons, collected in the positive electrode collector 111, to an external circuit.

The protective member 114 surrounds the end of the positive electrode tab 113. Particularly, the end surrounded by the protective member 114 includes the lower edge of the positive electrode tab 113. The protective member 114 may be formed of a tape, or be formed through molding. The protective member 114 further surrounds corners of the positive electrode tab 113 welded to the positive electrode collector 111. In addition, the protective member 114 further surrounds at least one portion of the positive electrode tab 113 facing the negative electrode plate 130. Thus, the protective member 114 insulates the positive electrode tab 113 from the negative electrode plate 130 facing the positive electrode tab 113, and protects the positive electrode collector 111 from the positive electrode tab 113, particularly, from the end of the positive electrode tab 113. That is, the protective member 114 surrounds relatively sharp edges and corners of the positive electrode tab 113 to protect the positive electrode collector 111 from the corners of the positive electrode tab 113. To this end, the protective member 114 may be formed of polymer resin such as polyester having electrical insulating property and elasticity.

The protective member 114 includes a welding hole 114a passing through an inner surface to another surface. Adhesive may be applied to the lower surface of the protective member 114. In the state where the protective member 114 surrounds the end of the positive electrode tab 113, the protective member 114 is adhered to the positive electrode collector 111, and the positive electrode collector 111 may be exposed through the welding hole 114a. The positive electrode tab 113 may be welded to the positive electrode collector 111 through the welding hole 114a. Although the welding hole 114a has a closed shape as a whole, the welding hole 114a may have an open side to increase a welding area.

Thus, since the positive electrode tab 113 is attached to the positive electrode collector 111 in the state where the protective member 114 is attached to the positive electrode tab 113, deformation of the positive electrode collector 111 due to a welding process for the positive electrode tab 113 and an attaching process for the protective member 114 can be reduced. Since the protective member 114 reduces direct contact between the positive electrode collector 111 and the positive electrode tab 113, deformation of the positive electrode collector 111 due to the welding process for the positive electrode tab 113 is prevented.

The separator 120 is disposed between the positive electrode plate 110 and the negative electrode plate 130. The separator 120 prevents a short circuit between the positive electrode plate 110 and the negative electrode plate 130, and provides a passage through which lithium ions pass. For example, the separator 120 may be formed of thermoplastic resin such as polyethylene and polypropylene, and have a porous membrane structure. When the inner temperature of the secondary battery reaches the melting point of the thermoplastic resin, the separator 120 having a porous membrane structure is melted to clog pores, so that the separator 120 functions as an insulating film. This prevents lithium ions from passing between the positive electrode plate 110 and the negative electrode plate 130 to stop charging or discharging, so that a current does not flow any more, thus stopping the inner temperature increase of the secondary battery.

The negative electrode plate 130 includes a negative electrode collector 131, negative electrode coating portions 132 disposed on one or more surfaces of the negative electrode collector 131, the negative electrode tab 133 coupled to a surface of the negative electrode collector 131, and a protective member 134 surrounding an end of the negative electrode tab 133.

The negative electrode collector 131 has a thin layer shape, like the positive electrode collector 111. The negative electrode collector 131 is formed of one of copper and copper alloy.

One or more surfaces of the negative electrode collector 131 are coated with the negative electrode coating portions 132. The negative electrode coating portions 132 may be formed of material, inserting or extracting lithium ions, such as lithium metal, lithium alloy, and carbon material including crystalline carbon, amorphous carbon, carbon composite, and carbon fiber. Portions of the negative electrode collector 131 extend out of the negative electrode coating portions 132 to form non-coating portions.

The negative electrode tab 133 is coupled to the non-coating portion of the negative electrode collector 131. The negative electrode tab 133 may be coupled to the non-coating portion through laser or resistance welding. For example, the negative electrode tab 133 may be formed of copper or nickel, and delivers electrons, collected in the negative electrode collector 131, to an external circuit.

The protective member 134 surrounds the end of the negative electrode tab 133. Particularly, the end surrounded by the protective member 134 includes the lower edge of the negative electrode tab 133. The protective member 134 further surrounds corners of the negative electrode tab 133 welded to the negative electrode collector 131. In addition, the protective member 134 further surrounds a portion of the negative electrode tab 113 facing the positive electrode plate 110. Thus, the protective member 134 insulates the negative electrode tab 133 from the positive electrode plate 110, and protects the negative electrode collector 131 from the negative electrode tab 133, particularly, from the end of the negative electrode tab 133. That is, the protective member 134 surrounds relatively sharp edges and corners of the negative electrode tab 133 to protect the negative electrode collector 131 from the corners of the negative electrode tab 133. To this end, the protective member 134 may be formed of polymer resin such as polyester. An adhesive layer may be disposed on the lower surface of the protective member 134, and a welding hole 134a is disposed in the protective member 134, like the protective member 114. The negative electrode tab 133 may be welded in the state where the negative electrode tab 133 and the protective member 134 are attached to the negative electrode collector 131.

Thus, like the positive electrode tab 113, deformation of the negative electrode collector 131 due to two stages of a welding process for the negative electrode tab 133 and an attaching process for the protective member 134 can be reduced. When the negative electrode tab 133 is welded, the protective member 134 protects the negative electrode collector 131 to prevent deformation of the negative electrode collector 131.

Hereinafter, the configuration of a secondary battery will now be described according to an embodiment of the invention.

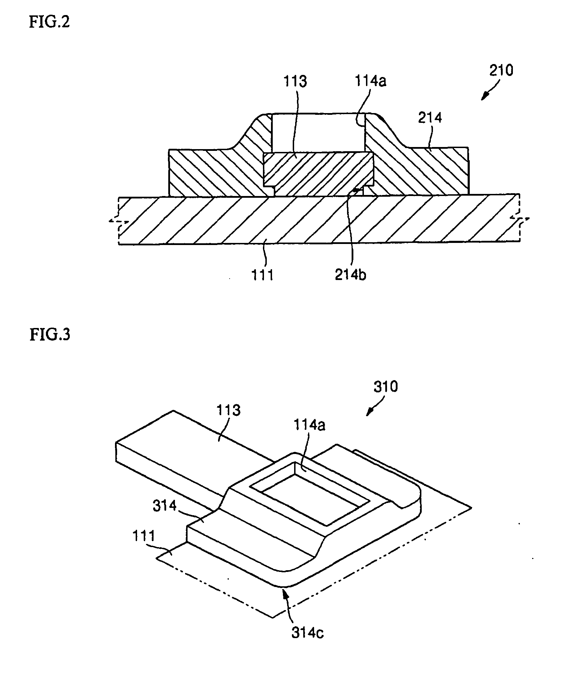

FIG. 2 is a partial cross-sectional view illustrating an electrode assembly used in the secondary battery according to the current embodiment of the invention.

Referring to FIG. 2, the electrode assembly used in the secondary battery according to the current embodiment of the invention includes a positive electrode plate 210, a separator (not shown), and a negative electrode plate (not shown). The separator is the same as that of the previous embodiment. The negative electrode plate has the same configuration as that of the positive electrode plate 210 except for material, but the material is already described in the previous embodiment. Like reference numerals denote like element throughout. Hereinafter, different parts of the current embodiment from the previous embodiment will be descried in detail.

The positive electrode plate 210 includes the positive electrode collector 111, a positive electrode coating portion (not shown), the positive electrode tab 113, and a protective member 214 surrounding the end of the positive electrode tab 113.

The protective member 214 insulates the positive electrode tab 113 and protects the positive electrode collector 111 from the positive electrode tab 113, particularly, from the end of the positive electrode tab 113.

The welding hole 114a is disposed in the protective member 214. Adhesive may be disposed on the lower surface of the protective member 214. Thus, the positive electrode tab 113 may be welded to the positive electrode collector 111 through the welding hole 114a.

The protective member 214 includes a lower protective region 214b is disposed in the lower potion of the positive electrode tab 113. The lower protective region 214b surrounds the lower surface disposed at edges of the positive electrode tab 113. Thus, the protective member 214 protects the positive electrode collector 111 from the corners of the end of the positive electrode tab 113 to prevent damage of the positive electrode collector 111 due to the positive electrode tab 113.

Hereinafter, the configuration of a secondary battery will now be described according to another embodiment of the invention.

FIG. 3 is a partial perspective view illustrating the secondary battery according to the current embodiment of the invention.

Referring to FIG. 3, an electrode assembly used in the secondary battery includes a positive electrode plate 310, a separator (not shown), and a negative electrode plate (not shown).

The positive electrode plate 310 includes the positive electrode collector 111, a positive electrode coating portion (not shown), the positive electrode tab 113, and a protective member 314 surrounding the end of the positive electrode tab 113.

The protective member 314 insulates the positive electrode tab 113 and protects the positive electrode collector 111 from the end of the positive electrode tab 113.

The welding hole 114a is disposed in the protective member 314. Adhesive may be disposed on the lower surface of the protective member 314. Thus, the positive electrode tab 113 may be welded to the positive electrode collector 111 through the welding hole 114a.

The protective member 314 has curved surfaces 314c in a portion coupled to the positive electrode collector 111. That is, the corners of the end of the protective member 314 contacting the positive electrode collector 111 are replaced with the curved surfaces 314c. Thus, the protective member 314 protects the positive electrode collector 111 from the end of the positive electrode tab 113 and from the corners of the end of the protective member 314.

Hereinafter, the configuration of a secondary battery will now be described according to another embodiment of the invention.

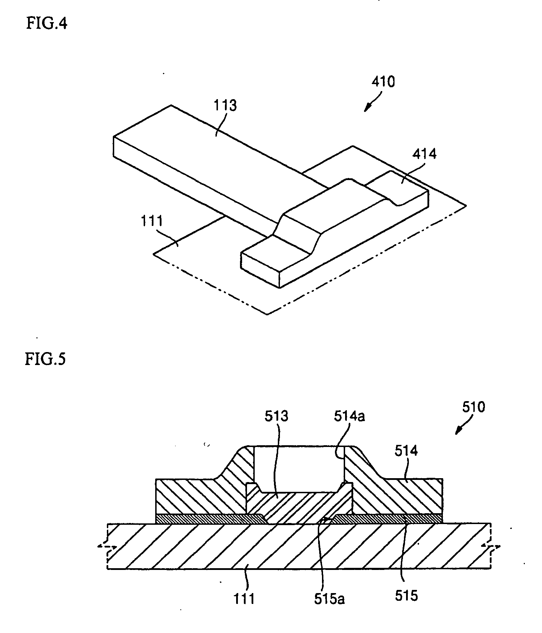

FIG. 4 is a partial perspective view illustrating the secondary battery according to the current embodiment of the invention.

Referring to FIG. 4, an electrode assembly used in the secondary battery includes a positive electrode plate 410, a separator (not shown), and a negative electrode plate (not shown).

The positive electrode plate 410 includes the positive electrode collector 111, a positive electrode coating portion (not shown), the positive electrode tab 113, and a protective member 414 surrounding the end of the positive electrode tab 113.

The protective member 414 surrounds only an end disposed in the area of the positive electrode tab 113 coupled to the positive electrode collector 111. That is, the protective member 414 is disposed on the inside of the positive electrode collector 111 to expose a portion of the positive electrode tab 113 overlapping the positive electrode collector 111. Thus, the positive electrode tab 113 may be welded to the positive electrode collector 111 through the exposed portion. Although not shown, the protective member 414 may include a welding hole, which may increase a welding area.

Hereinafter, the configuration of a secondary battery will now be described according to another embodiment of the invention.

FIG. 5 is a partial perspective view illustrating an electrode assembly used in the secondary battery according to the current embodiment of the invention.

Referring to FIG. 5, the electrode assembly used in the secondary battery includes a positive electrode plate 510, a separator (not shown), and a negative electrode plate (not shown).

The positive electrode plate 510 includes the positive electrode collector 111, a positive electrode coating portion (not shown), a positive electrode tab 513, and protective members 514 and 515 surrounding an end of the positive electrode tab 513.

The positive electrode tab 513 is coupled to the non-coating portion of the positive electrode collector 111. The positive electrode tab 113 may be coupled to the non-coating portion through laser or resistance welding. First, the lower surface of the positive electrode tab 513 is surrounded by the protective member 515, then, the positive electrode tab 513 is placed on the non-coating portion of the positive electrode collector 111, and then, is coupled to the non-coating portion through welding. The positive electrode tab 513 is disposed to be spaced apart from the upper surface of the non-coating portion by the thickness of the protective member 515, and then, is coupled to the non-coating portion through welding.

The protective members 514 and 515 surround the end of the positive electrode tab 513. The protective members 514 and 515 include a first protective member (also denoted by 514) disposed on the upper portion of the positive electrode tab 513, and a second protective member (also denoted by 515) disposed on the lower portion of the positive electrode tab 513.

The positive electrode tab 513 is placed on the upper portion of the second protective member 515, then, the upper portion of the positive electrode tab 513 is covered with the first protective member 514, and then, the positive electrode tab 513 is placed on the upper portion of the positive electrode collector 111. The first and second protective members 514 and 515 are coupled to each other through adhesive with the positive electrode tab 513 therebetween.

The positive electrode tab 513 is welded through a welding hole 514a formed in the first protective member 514, and the positive electrode tab 513 is coupled to the non-coating portion through a welding hole 515a of the second protective member 515. In this case, prior to welding, the lower surface of the second protective member 515 need not be adhered to the non-coating portion of the positive electrode collector 111. This is because the second protective member 515 may be coupled to the non-coating portion of the positive electrode collector 111 during the welding. However, the welding may be performed after the lower of the second protective member 515 is adhered to the non-coating portion, to dispose the first and second protective members 514 and 515 at an exact position.

Hereinafter, the configuration of a secondary battery will now be described according to another embodiment of the invention.

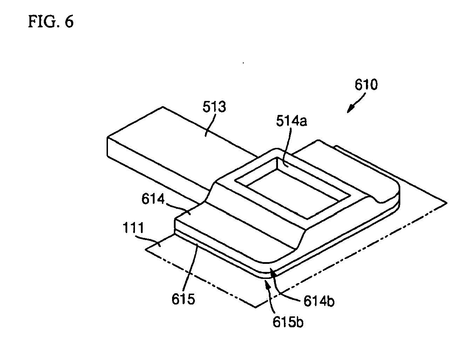

FIG. 6 is a partial perspective view illustrating an electrode assembly used in the secondary battery according to the current embodiment of the invention.

Referring to FIG. 6, the electrode assembly used in the secondary battery includes a positive electrode plate 610, a separator (not shown), and a negative electrode plate (not shown).

The positive electrode plate 610 includes the positive electrode collector 111, a positive electrode coating portion (not shown), the positive electrode tab 513, and protective members 614 and 615 surrounding an end of the positive electrode tab 513.

The protective members 614 and 615 are the same as the protective members 514 and 515 of the embodiment as described above. However, portions of the protective members 614 and 615 coupled to the positive electrode collector 111 have curved surfaces 614b and 615b. That is, the protective members 614 and 615 have the curved surfaces 614b and 615b instead of the edges of the ends contacting the positive electrode collector 111. Thus, since the edges are removed from the protective members 614 and 615, the positive electrode collector 111 is protected from the ends of the positive electrode tab 513 and the edges of the ends of the protective members 614 and 615.

Hereinafter, the configuration of a secondary battery will now be described according to another embodiment of the invention.

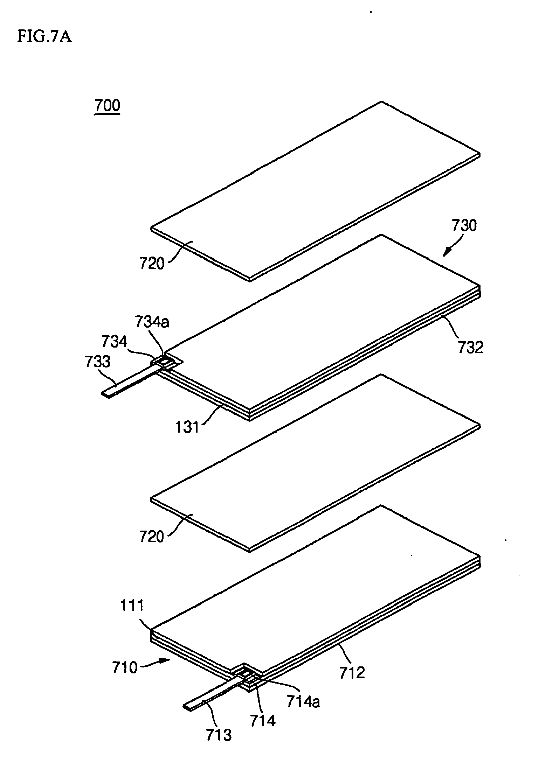

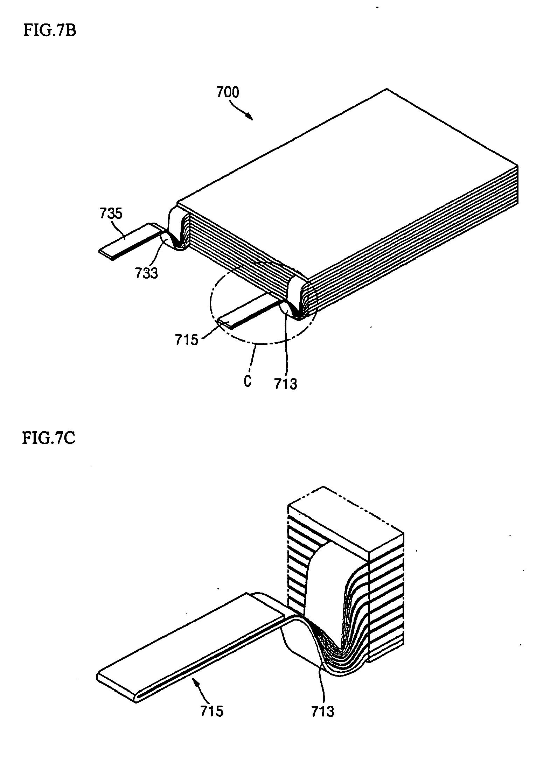

FIG. 7A is an exploded perspective view illustrating an electrode assembly 500 used in the secondary battery according to the current embodiment of the invention. FIG. 7B is a perspective view illustrating the assembling state of the electrode assembly 500. FIG. 7C is an enlarged view illustrating a portion C of FIG. 7B.

Referring to FIGS. 7A through 7C, the electrode assembly 700 used in the second battery according to the current embodiment includes positive electrode plates 710, separators 720, and negative electrode plates 730. The electrode assembly 700 has a stack structure. That is, the positive electrode plates 710, the separators 720, and the negative electrode plates 730 are sequentially stacked to form the electrode assembly 700.

Each of the positive electrode plates 710 includes the positive electrode collector 111, positive electrode coating portions 712 disposed on one or more surfaces of the positive electrode collector 111, a positive electrode tab 713 coupled to a surface of the positive electrode collector 111, a protective member 714 surrounding a first end of the positive electrode tab 713, and a positive terminal 715 disposed at a second end of the positive electrode tab 713.

A first surface of the positive electrode collector 111 except for the region to which the positive electrode tab 713 is coupled, and a second surface of the positive electrode collector 111 are entirely coated with the positive electrode coating portions 712. The portion of the positive electrode collector 111 disposed out of the positive electrode coating portions 712 forms a non-coating portion. Thus, the amount of coating portions formed on the positive electrode plates 710 is maximized, and the capacity of the secondary battery is increased. The positive electrode coating portions 712 may be formed of material, inserting or extracting lithium ions, such as one or more composite oxides of lithium and at least one of cobalt, manganese, and nickel. Horizontal positions of the positive electrode plates 710, where the positive electrode coating portions 712 are disposed, are the same, and thus, horizontal positions of the positive electrode plates 710, where the non-coating portions are disposed, are the same.

The positive electrode tab 713 may be formed of aluminum, and is coupled to the non-coating portion of the positive electrode collector 111. The positive electrode tabs 713 may be welded to the same horizontal positions of the non-coating portions, respectively. That is, the positive electrode tabs 713 may be arrayed along a vertical straight line.

The protective member 714, surrounding an end of the positive electrode tab 713, insulates the positive electrode tab 713 and protects the positive electrode collector 111 from the end of the positive electrode tab 713.

A welding hole 714a is disposed in the protective member 714. Thus, the positive electrode tab 713 may be welded to the positive electrode collector 111 through the welding hole 714a.

Thus, since a welding process is performed in the state where the positive electrode tab 713 together with the protective member 714 is attached to the positive electrode collector 111, two stage deformation due to the welding process for the positive electrode tab 713 and an attaching process for the protective member 714 can be reduced. When the positive electrode tab 713 is welded, the protective member 714 protects the positive electrode collector 111 to prevent deformation of the positive electrode collector 111.

The positive terminal 715 is formed by bending the second end of the positive electrode tab 713. That is, the uppermost or lowermost one of the positive electrode tabs 713 of the stacked positive electrode plates 710 is bent to surround the others of the positive electrode tabs 713, and the welding process is performed to form the positive terminal 715. That is, since the positive terminal 715 is formed by bending the positive electrode tab 713 without an additional structure, costs of the secondary battery are reduced, and more tight coupling of the positive terminal 715 is achieved. The positive electrode tab 713 forming the positive terminal 715 may have a larger length and a larger thickness than those of the other positive electrode tabs 713.

The separators 720 are stacked between the positive electrode plates 710 and the negative electrode plates 730. The separators 720 prevent a short circuit between the positive electrode plate 710 and the negative electrode plate 730, and allow the passing of lithium ions.

Each of the negative electrode plates 730 includes the negative electrode collector 131, negative electrode coating portions 732 disposed on one or more surfaces of the negative electrode collector 131, a negative electrode tab 733 coupled to a first surface of the negative electrode collector 131, a protective member 734 surrounding a first end of the negative electrode tab 733, and a negative terminal 735 disposed in a second end of the negative electrode tab 733.

The negative electrode coating portions 732 are formed on one or more surfaces of the negative electrode collector 131 through coating. For example, the first surface of the negative electrode collector 131 except for the region to which the negative electrode tab 733 is coupled, and a second surface of the negative electrode collector 131 are entirely coated with the negative electrode coating portions 732. The portion of the negative electrode collector 131 disposed out of the negative electrode coating portions 732 forms a non-coating portion. Thus, the amount of coating portions formed on the negative electrode plate 730 is maximized, and the capacity of the secondary battery is increased. Horizontal positions of the negative electrode plates 730, where the negative electrode coating portions 732 are disposed, are the same. Horizontal positions of the negative electrode plates 730, where the non-coating portions are disposed, are the same.

The negative electrode tabs 733 may be formed of nickel, and are coupled to the non-coating portions of the negative electrode collector 131. Horizontal positions of the negative electrode plates 730, where the negative electrode tabs 733 are disposed, are the same. That is, the negative electrode tabs 733 are arrayed along a vertical straight line. The negative electrode tabs 733 are horizontally spaced apart from the positive electrode tabs 713.

The protective member 734, surrounding the first end of the negative electrode tab 733, insulates the negative electrode tab 733, and protects the negative electrode collector 131 from the first end of the negative electrode tab 733.

A welding hole 734a is disposed in the protective member 734. Thus, the negative electrode tab 733 may be welded to the negative electrode collector 131 through the welding hole 734a.

Thus, since a welding process is performed in the state where the negative electrode tab 733 together with the protective member 734 is attached to the negative electrode collector 131, two stage deformation of the negative electrode collector 131 due to the welding process for the negative electrode tab 733 and an attaching process for the protective member 734 can be reduced. When the negative electrode tab 733 is welded, the protective member 734 protects the negative electrode collector 131 to prevent deformation of the negative electrode collector 131.

The negative terminal 735 is formed by bending the second end of the negative electrode tab 733. That is, the uppermost or lowermost one of the negative electrode tabs 733 of the stacked negative electrode plates 730 is bent to surround the others of the negative electrode tabs 733, and the welding process is performed to form the negative terminal 735. That is, since the negative terminal 735 is formed by bending the negative electrode tab 733 without an additional structure, costs of the secondary battery are reduced, and more tight coupling of the negative terminal 735 is achieved. The negative electrode tab 733 forming the negative terminal 735 may have a larger length and a larger thickness than those of the other negative electrode tabs 733.

Hereinafter, a method of fabricating a secondary battery will now be described according to an embodiment of the invention.

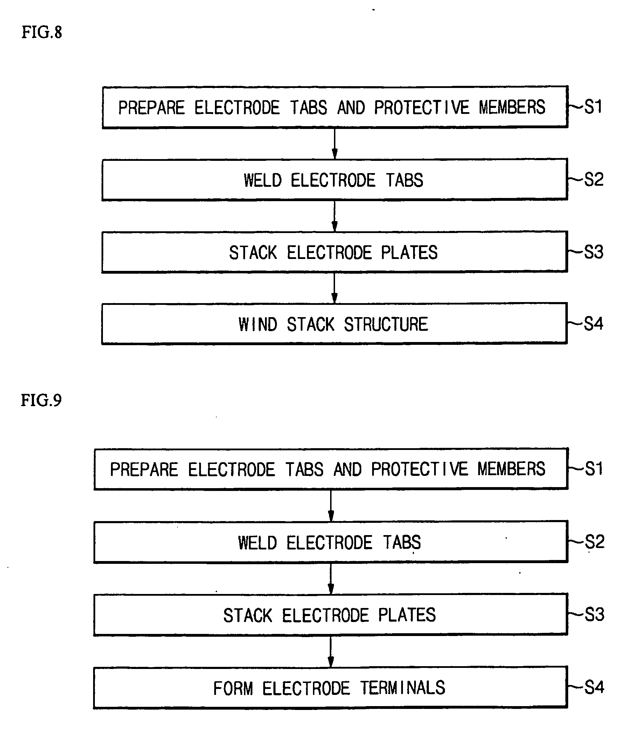

FIG. 8 is a flowchart illustrating the method of fabricating a secondary battery according to the current embodiment of the invention.

Referring to FIG. 8, the method of fabricating a secondary battery includes an operation S of preparing electrode tabs and protective members, an operation S2 of welding the electrode tabs, a stacking operation S3, and a winding operation S4. Hereinafter, the operations S1 through S4 of FIG. 8 will now be described with reference to FIGS. 1A through 1C.

In the operation S1, the positive electrode tab 113, the protective member 114 surrounding the positive electrode tab 113, the negative electrode tab 133, and the protective member 134 surrounding the negative electrode tab 133 are prepared. The protective member 114 surrounds the end of the positive electrode tab 113. The protective member 114 may be formed of a tape, or be formed through molding. The welding hole 114a is disposed in the protective member 114 to expose a portion of the positive electrode tab 113. The protective member 134 surrounding the negative electrode tab 133 has the similar configuration to that of the protective member 114. The lower surfaces of the protective members 114 and 134 may be provided with adhesive members to increase adhering force to the positive electrode collector 111 and the negative electrode collector 131.

In operation S2, the positive electrode tab 113 is welded to the positive electrode collector 111, and the negative electrode tab 133 is welded to the negative electrode collector 131. At this point, the positive electrode tab 113 is welded through the welding hole 114a of the protective member 114 in the state where the positive electrode tab 113 together with the protective member 114 is disposed on the non-coating portion of the positive electrode collector 111. The negative electrode tab 133 is welded through the welding hole 134a of the protective member 134 in the state where the negative electrode tab 133 together with the protective member 134 is disposed on the non-coating portion of the negative electrode collector 131. Since attaching of the protective members 114 and 134 and the welding of the positive electrode tab 113 and the negative electrode tab 133 are performed in a single process, deformation of the positive electrode collector 111 and the negative electrode collector 131 can be reduced. Furthermore, since the positive electrode tab 113 and the negative electrode tab 133 are welded through the welding holes 114a and 134a, the protective member 114 and 134 protect the positive electrode collector 111 and the negative electrode collector 131 to prevent deformation due to the welding.

In the stacking operation S3, the positive electrode plate 110 coupled with the positive electrode tab 113 and the protective member 114, and the negative electrode plate 130 coupled with the negative electrode tab 133 and the protective member 134 are stacked. At this point, the separator 120 is stacked between the positive electrode plate 110 and the negative electrode plate 130 on an outside of at least one of the positive electrode plate 110 and the negative electrode plate 130. Thus, the separator 120 prevents a short circuit between the positive electrode plate 110 and the negative electrode plate 130 and allows the passing of lithium ions.

In the winding operation S4, a stack structure of the positive electrode plate 110, the separator 120, and the negative electrode plate 130 is wound. The electrode assembly 100 in which the positive electrode plate 110, the separator 120, and the negative electrode plate 130 are sequentially stacked is wound in a jelly roll shape. At this point, the positive electrode tab 113 and the negative electrode tab 133 of the electrode assembly 100 protrude upward. The positive electrode tab 113 of the positive electrode plate 110 may be spaced apart from the negative electrode tab 133 of the negative electrode plate 130.

Thereafter, the electrode assembly 100 is inserted into a case or a pouch, and electrolyte is injected into the case or the pouch to form a secondary battery.

Hereinafter, a method of fabricating a secondary battery will now be described according to another embodiment of the invention.

FIG. 9 is a flowchart illustrating the method of fabricating a secondary battery according to the current embodiment of the invention.

Referring to FIG. 9, the method of fabricating a secondary battery includes an operation S1 of preparing electrode tabs and protective members, an operation S2 of welding the electrode tabs, a stacking operation S3, and an operation S4 of forming electrode terminals. Hereinafter, the operations S1 through S4 of FIG. 9 will now be described with reference to FIGS. 7A through 7C.

In the operation S1, the positive electrode tab 713, the protective member 714 surrounding the positive electrode tab 713, the negative electrode tab 733, and the protective member 734 surrounding the negative electrode tab 733 are prepared. The protective member 714 surrounds the end of the positive electrode tab 713. The welding hole 714a is disposed in the protective member 714 to expose a portion of the positive electrode tab 713. The protective member 734 surrounding the negative electrode tab 733 has the similar configuration to that of the protective member 714.

In operation S2, the positive electrode tab 713 is welded to the positive electrode collector 111, and the negative electrode tab 733 is welded to the negative electrode collector 131. At this point, the positive electrode tab 713 is welded through the welding hole 714a of the protective member 714 in the state where the positive electrode tab 713 together with the protective member 714 is disposed on the non-coating portion of the positive electrode collector 111. The negative electrode tab 733 is welded through the welding hole 734a of the protective member 734 in the state where the negative electrode tab 733 together with the protective member 734 is disposed on the non-coating portion of the negative electrode collector 131.

Since attaching of the protective members 714 and 734 and the welding of the positive electrode tab 713 and the negative electrode tab 733 are performed in a single process, deformation of the positive electrode collector 111 and the negative electrode collector 131 can be reduced. Furthermore, since the positive electrode tab 713 and the negative electrode tab 733 are welded through the welding holes 714a and 734a, deformation of the positive electrode collector 111 and the negative electrode collector 131 due to the welding can be prevented.

In the stacking operation S3, the positive electrode plate 710 coupled with the positive electrode tab 713 and the protective member 714, and the negative electrode plate 730 coupled with the negative electrode tab 733 and the protective member 734 are stacked. At this point, the separator 720 is stacked between the positive electrode plate 710 and the negative electrode plate 730 on outsides of the positive electrode plate 710 and the negative electrode plate 730. At this point, each of the positive electrode plate 710, the separator 120, and the negative electrode plate 730 is provided in plurality. Horizontal positions of the positive electrode plates 710, where the positive electrode tabs 713 are disposed, are the same. That is, the positive electrode tabs 713 are arrayed along a vertical straight line. Horizontal positions of the negative electrode plates 730, where the negative electrode tabs 733 are disposed, are the same. That is, the negative electrode tabs 733 are arrayed along a vertical straight line.

In operation S4, the positive electrode tab 713 is bent to form the positive terminal 715, and the negative electrode tab 733 is bent to form the negative terminal 735. The positive terminal 715 is formed by bending the uppermost or lowermost one of the positive electrode tabs 713, and by welding the uppermost or lowermost positive electrode tab 713 with the other positive electrode tabs 713 in the uppermost or lowermost positive electrode tab 713. That is, since the positive terminal 715 is formed by bending and welding the positive electrode tab 713 without an additional structure, costs of the secondary battery are reduced, and more tight coupling of the positive terminal 715 is achieved. It will be appreciated that the negative terminal 735 may be formed using the negative electrode tabs 733 according to the same method as that of the positive terminal 715.

According to embodiments of the invention, the protective members are coupled to the positive electrode tab and the negative electrode tab and disposed on the collectors, and the welding processes are performed, thereby reducing deformation of the collectors due to the welding processes and the attaching of the protective members.

Furthermore, the welding process is performed at the position exposed out of the protective member, so that the protective member protects the collector, thereby preventing deformation of the collector during the welding process.

Embodiments of the invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A secondary battery comprising:
an electrode assembly including a first electrode plate coupled with a positive electrode tab, a second electrode plate coupled with a second electrode tab and a separator,
wherein the first electrode tab is coupled to a non-coating portion of the first electrode plate, to which a coating portion is not applied, and has an end portion thereof surrounded by a protective member that surrounds a surface of the first electrode tab that is disposed at an edge of the first electrode tab and adjacent the first electrode plate.

2. A secondary battery as claimed in claim 1, wherein the protective member is provided with a welding hole.

3. A secondary battery as claimed in claim 1 or 2, wherein an adhesive is disposed on a surface of the protective member and adheres the protective member to a collector of the first electrode plate.

4. A secondary battery as claimed in any preceding claim, wherein the protective member comprises:
a first protective member portion disposed on a first surface of the first electrode; and
a second protective member portion coupled to the first protective member portion, so as to at least partially enclose the first electrode tab between the first and second protective members.

5. A secondary battery as claimed in any preceding claim, wherein the protective member is formed of a tape, or is formed through molding.

6. A secondary battery as claimed in any preceding claim, wherein the protective member has a curved surface at a corner coupled to the non-coating portion.

7. A secondary battery as claimed in any preceding claim, wherein the electrode assembly has a jelly roll shape in which the first electrode plate, the separator, and the second electrode plate are stacked and wound, and the first electrode tab is spaced apart from the second electrode tab.

8. A secondary battery as claimed in any preceding claim, wherein each of the first electrode plate, the separator, and the second electrode plate are provided in plural,
the electrode assembly has a stack structure in which the first electrode plates, the separators, and the second electrode plates are stacked, and
the first electrode tabs of the first electrode plates and the second electrode tabs of the second electrode plates are gathered together according to polarity, so as to respectively form electrode terminals.

9. A secondary battery as claimed in claim 8, wherein the electrode terminal of the first electrode tabs is formed by bending one of the first electrode tabs to surround the other first electrode tabs,
and the electrode terminal of the second electrode tabs is formed by bending one of the negative electrode tabs to surround the other second electrode tabs.

10. A secondary battery as claimed in claim 9, wherein the bent tabs are the outermost ones of the first electrode tabs and the second electrode tabs.

11. A secondary battery as claimed in claim 9 or 10, wherein each bent tab has a length that is greater than the other tabs having the same polarity.

12. A secondary battery as claimed in claim 9, 10 or 11 wherein each bent tab has a thickness that is greater than the other tabs having the same polarity.

13. A method of fabricating a secondary battery having an electrode assembly including a first electrode plate and a separator, the first electrode plate being coupled with a first electrode tab, the method comprising:
locating a protective member around an end portion of the first electrode tab where the protective member surrounds a surface of the first electrode tab that is disposed at an edge of the first electrode tab and adjacent the first electrode plate;
welding the first electrode tab to a non-coating portion of the first electrode plate; and
sequentially stacking the first electrode plate, the separator, and a second electrode plate.

14. A method as claimed in claim 13, wherein a welding hole is formed in the protective member and the first electrode tab is welded to the electrode plate via the welding hole.

15. A method as claimed in claim 13 or 14, further comprising winding the first electrode plate, the second electrode plate, and the separator to form the electrode assembly after the stacking of the electrode plates and the separator.

16. A method as claimed in claim 13 or 14,
wherein the electrode assembly comprises a plurality of first electrode plates, a plurality of separators and a plurality of second electrode plates, and the method comprises
gathering together and welding the first electrode tabs of the first electrode plates and the second electrode tabs of the second electrode plates according to polarity, so as to respectively form electrode terminals.

17. A method as claimed in claim 16, wherein the forming of the electrode terminals comprises:
bending one of the first electrode tabs to surround the other first electrode tabs; and
bending one of the second electrode tabs to surround the other second electrode tabs.

18. A method as claimed in claim 17, wherein the forming of the electrode terminals comprises bending the outermost one of the first electrode tabs and the outermost one of the second electrode tabs.

19. A method as claimed in claim 17 or 18, wherein the forming of the electrode terminals comprises bending a said first electrode tab having a length greater than the other first electrode tabs and a said second electrode tab having a length greater than the other second negative electrode tabs.

20. A method as claimed in claim 17, 18 or 19, wherein the forming of the electrode terminals comprises bending a said first electrode tab having a thickness greater than the other first electrode tabs and a said second electrode tab having a thickness greater than the other second electrode tabs.

## Patentansprüche

1. Sekundärbatterie, die aufweist:
eine Elektrodenanordnung, die umfasst: eine erste Elektrodenplatte, die mit einer positiven Elektrodenkontaktnase verbunden ist; eine zweite Elektrodenplatte, die mit einer zweiten Elektrodenkontaktnase verbunden ist; und ein Trennelement,
wobei die erste Elektrodenkontaktnase mit einem Nichtbeschichtungsabschnitt der ersten Elektrodenplatte verbunden ist, auf die kein Beschichtungsabschnitt aufgebracht wird, und wobei ein Endabschnitt davon mittels eines Schutzelementes umgeben ist, das eine Oberfläche der ersten Elektrodenkontaktnase umgibt, die an einem Rand der ersten Elektrodenkontaktnase und benachbart der ersten Elektrodenplatte angeordnet ist.

2. Sekundärbatterie nach Anspruch 1, bei der das Schutzelement mit einem Schweißloch versehen ist.

3. Sekundärbatterie nach Anspruch 1 oder 2, bei der ein Klebstoff auf einer Oberfläche des Schutzelementes angeordnet wird und das Schutzelement an einem Kollektor der ersten Elektrodenplatte anklebt.

4. Sekundärbatterie nach einem der vorhergehenden Ansprüche, bei der das Schutzelement aufweist:
einen ersten Schutzelementabschnitt, der auf einer ersten Oberfläche der ersten Elektrode angeordnet ist; und
einen zweiten Schutzelementabschnitt, der mit dem ersten Schutzelementabschnitt verbunden ist, um so mindestens teilweise die erste Elektrodenkontaktnase zwischen dem ersten und dem zweiten Schutzelement einzuschließen.

5. Sekundärbatterie nach einem der vorhergehenden Ansprüche, bei der das Schutzelement aus einem Band oder durch Formen gebildet wird.

6. Sekundärbatterie nach einem der vorhergehenden Ansprüche, bei der das Schutzelement eine gebogene Fläche an einer Ecke aufweist, die mit dem Nichtbeschichtungsabschnitt verbunden ist.

7. Sekundärbatterie nach einem der vorhergehenden Ansprüche, bei der die Elektrodenanordnung eine Biskuitrollenform aufweist, bei der die erste Elektrodenplatte, das Trennelement und die zweite Elektrodenplatte gestapelt und gewickelt sind, und wobei die erste Elektrodenkontaktnase von der zweiten Elektrodenkontaktnase beabstandet ist.

8. Sekundärbatterie nach einem der vorhergehenden Ansprüche, bei der eine jede von erster Elektrodenplatte, Trennelement und zweiter Elektrodenplatte mehrfach vorhanden sind,
die Elektrodenanordnung eine Stapelstruktur aufweist, bei der die ersten Elektrodenplatten, die Trennelemente und die zweiten Elektrodenplatten gestapelt sind, und
die ersten Elektrodenkontaktnasen der ersten Elektrodenplatten und die zweiten Elektrodenkontaktnasen der zweiten Elektrodenplatten entsprechend der Polarität zusammengestellt werden, um so jeweils Elektrodenanschlussklemmen zu bilden.

9. Sekundärbatterie nach Anspruch 8, bei der die Elektroderlanschlussklemme der ersten Elektrodenkontaktnasen durch Biegen einer der ersten Elektrodenkontaktnasen gebildet wird, um die anderen ersten Elektrodenkontaktnasen zu umgeben,
und bei der die Elektrodenanschlussklemme der zweiten Elektrodenkontaktnasen durch Biegen einer der negativen Elektrodenkontaktnasen gebildet wird, um die anderen zweiten Elektrodenkomaktnasen zu umgeben.

10. Sekundärbatterie nach Anspruch 9, bei der die gebogenen Kontaktnasen die äußersten der ersten Elektrodenkontaktnasen und der zweiten Elektrodenkontaktnasen sind.

11. Sekundärbatterie nach Anspruch 9 oder 10, bei der eine jede gebogene Kontaktnase eine Länge aufweist, die größer ist als die der anderen Kontaktnasen mit der gleichen Polarität.

12. Sekundärbatterie nach Anspruch 9, 10 oder 11, bei der eine jede gebogene Kontaktnase eine Dicke aufweist, die größer ist als die der anderen Kontaktnasen mit der gleichen Polarität.

13. Verfahren zur Herstellung einer Sekundärbatterie mit einer Elektrodenanordnung, die eine erste Elektrodenplatte und ein Trennelement umfasst, wobei die erste Elektrodenplatte mit einer ersten Elektrodenkontaktnase verbunden ist, wobei das Verfahren die folgenden Schritte aufweist:
Anordnen eines Schutzelementes um einen Endabschnitt der ersten Elektrodenkontaktnase, wobei das Schutzelement eine Oberfläche der ersten Elektrodenkontaktnase umgibt, die an einem Rand der ersten Elektrodenkontaktnase und benachbart der ersten Elektrodenplatte angeordnet ist;
Schweißen der ersten Elektrodenkontaktnase auf einen Nichtbeschichtungsabschnitt der ersten Elektrodenplatte; und
sequentielles Stapeln der ersten Elektrodenplatte, des Trennelements und einer zweiten Elektrodenplatte.

14. Verfahren nach Anspruch 13, bei dem ein Schweißloch im Schutzelement ausgebildet ist und die erste Elektrodenkontaktnase auf die Elektrodenplatte durch das Schweißloch geschweißt wird.

15. Verfahren nach Anspruch 13 oder 14, das außerdem den Schritt des Wickelns der ersten Elektrodenplatte, der zweiten Elektrodenplatte und des Trennelementes aufweist, um die Elektrodenanordnung nach dem Stapeln der Elektrodenplatten und des Trennelementes zu bilden.

16. Verfahren nach Anspruch 13 oder 14,
bei dem die Elektrodenanordnung eine Vielzahl von ersten Elektrodenplatten, eine Vielzahl von Trennelementen und eine Vielzahl von zweiten Elektrodenplatten aufweist, und wobei das Verfahren die folgenden Schritte aufweist:
Zusammenstellen und Schweißen der ersten Elektrodenkontaktnasen der ersten Elektrodenplatten und der zweiten Elektrodenkontaktnasen der zweiten Elektrodenplatten entsprechend der Polarität, um so jeweils Elektrodenanschlussklemmen zu bilden.

17. Verfahren nach Anspruch 16, bei dem das Ausbilden der Elektrodenanschlussklemmen die folgenden Schritte aufweist:
Biegen einer der ersten Elektrodenkontaktnasen, um die anderen ersten Elektrodenkontaktnasen zu umgeben; und
Biegen einer der zweiten Elektrodenkontaktnasen, um die anderen zweiten Elektrodenkontaktnasen zu umgeben.

18. Verfahren nach Anspruch 17, bei dem das Ausbilden der Elektrodenanschlussklemmen den Schritt des Biegens der äußersten der ersten Elektrodenkontaktnasen und der äußersten der zweiten Elektrodenkontaktnasen aufweist.

19. Verfahren nach Anspruch 17 oder 18, bei dem das Ausbilden der Elektrodenansehlussklemmen die Schritte des Biegens einer ersten Elektrodenkontaktnase mit einer Länge größer als die der anderen ersten Elektrodenkontaktnasen und einer zweiten Elektrodenkontaktnase mit einer Länge größer als die der anderen zweiten negativen Elektrodenkontaktnasen aufweist.

20. Verfahren nach Anspruch 17, 18 oder 19, bei dem das Ausbilden der Elektrodenanschlussklemmen die Schritte des Biegens einer ersten Elektrodenkontaktnase mit einer Dicke größer als die der anderen ersten Elektrodenkontaktnasen und einer zweiten Elektrodenkontaktnase mit einer Dicke größer als die der anderen zweiten Elektrodenkontaktnasen aufweist.

## Revendications

1. Batterie secondaire, comprenant :
un assemblage d'électrode, englobant une première plaque d'électrode accouplée à une languette d'électrode positive, une deuxième plaque d'électrode accouplée à une deuxième languette d'électrode, et un séparateur ;
dans laquelle la première languette d'électrode est accouplée à une partie sans revêtement de la première plaque d'électrode, sur laquelle aucune partie de revêtement n'est appliquée, et comporte une partie d'extrémité entourée par un élément protecteur entourant une surface de la première languette d'électrode agencée au niveau d'un bord de la première languette d'électrode et en un point adjacent à la première plaque d'électrode.

2. Batterie secondaire selon la revendication 1, dans laquelle l'élément protecteur comporte un trou de soudage.

3. Batterie secondaire selon les revendications 1 ou 2, dans laquelle un adhésif est disposé sur une surface de l'élément protecteur et fait adhérer l'élément protecteur sur un collecteur de la première plaque d'électrode.

4. Batterie secondaire selon l'une quelconque des revendications précédentes, dans lequel l'élément protecteur comprend :
une première partie de l'élément protecteur, agencée sur une première surface de la première électrode ; et
une deuxième partie de l'élément protecteur, accouplée à la première partie de l'élément protecteur, de sorte à renfermer au moins en partie la première languette d'électrode entre les premier et deuxième éléments protecteurs.

5. Batterie secondaire selon l'une quelconque des revendications précédentes, dans laquelle l'élément protecteur est formé à partir d'une bande ou est formé par moulage.

6. Batterie secondaire selon l'une quelconque des revendications précédentes, dans laquelle l'élément protecteur comporte une surface courbée au niveau d'un coin accouplée à la partie sans revêtement.

7. Batterie secondaire selon l'une quelconque des revendications précédentes, dans laquelle l'assemblage d'électrode a une forme en roulé, dans laquelle sont empilés et enroulés la première plaque d'électrode, le séparateur et la deuxième plaque d'électrode, la première languette d' électrode étant séparée de la deuxième languette d'électrode.

8. Batterie secondaire selon l'une quelconque des revendications précédentes, comportant plusieurs premières plaques d'électrode, plusieurs séparateurs et plusieurs deuxièmes plaques d'électrode ;
l'assemblage d'électrode ayant une structure empilée, dans laquelle les premières plaques d'électrode, les séparateurs et les deuxièmes plaques d'électrode sont empilés ; et
les premières languettes d'électrode des premières plaques d'électrode et les deuxièmes languettes d'électrode des deuxièmes plaques d'électrode étant rassemblées en fonction de la polarité, de sorte à former respectivement des bornes d'électrode.

9. Batterie secondaire selon la revendication 8, dans laquelle la borne d'électrode des premières languettes d'électrode est formée en fléchissant une des premières languettes d'électrode de sorte à entourer les autres premières languettes d'électrode ;
la borne d'électrode des deuxièmes languettes d'électrode étant formée en fléchissant une des languettes d'électrode négatives de sorte à entourer les autres deuxièmes languettes d'électrode.

10. Batterie secondaire selon la revendication 9, dans laquelle les languettes fléchies sont les languettes externes extrêmes des premières languettes d'électrode et des deuxièmes languettes d'électrode.

11. Batterie secondaire selon les revendications 9 ou 10, dans laquelle chaque languette fléchie a une longueur supérieure à celle des autres languettes ayant la même polarité.

12. Batterie secondaire selon les revendications 9, 10 ou 11, dans laquelle chaque languette fléchie a une épaisseur supérieure à celle des autres languettes ayant la même polarité.

13. Procédé de fabrication d'une batterie secondaire comportant un assemblage d'électrode englobant une première plaque d'électrode et un séparateur, la première plaque d'électrode étant accouplée à une première languette d'électrode, le procédé comprenant les étapes ci-dessous :
positionnement d'un élément protecteur autour d'une partie d'extrémité de la première patte d'électrode, l'élément protecteur entourant une surface de la première languette d'électrode agencée au niveau d'un bord de la première languette d'électrode et en un point adjacent à la première plaque d'électrode ;
soudage de la première languette d'électrode sur une partie sans revêtement de la première plaque d'électrode ; et
empilage séquentiel de la première plaque d'électrode, du séparateur et d'une deuxième plaque d'électrode.

14. Procédé selon la revendication 13, dans lequel un trou de soudage est formé dans l'élément protecteur, la première languette d'électrode étant soudée sur la plaque d'électrode à travers le trou de soudage.

15. Procédé selon les revendications 13 ou 14, comprenant en outre l'étape d'enroulement de la première plaque d'électrode, de la deuxième plaque d'électrode et du séparateur pour former l'assemblage d'électrode après l'empilage des plaques d'électrode et du séparateur.

16. Procédé selon les revendications 13 ou 14,
dans lequel l'assemblage d'électrode comprend plusieurs premières plaques d'électrode, plusieurs séparateurs et plusieurs deuxièmes plaques d'électrode, le procédé comprenant l'étape ci-dessous :
rassemblement et soudage des premières languettes d'électrode des premières plaques d'électrode et des deuxièmes languettes d'électrode des deuxièmes plaques d'électrode en fonction de la polarité, de sorte à former respectivement des bornes d'électrode.

17. Procédé selon la revendication 16, dans lequel l'étape de formation des bornes d'électrode comprend les étapes ci-dessous :
fléchissement de l'une des premières languettes d'électrode de sorte à entourer les autres premières languettes d'électrode ; et
fléchissement de l'une des deuxièmes languettes d'électrode de sorte à entourer les autres deuxièmes languettes d'électrode.

18. Procédé selon la revendication 17, dans lequel l'étape de formation des bornes d'électrode comprend le fléchissement de la première languette d'électrode externe le plus à l'extérieur et de la deuxième languette d'électrode externe le plus à l'extérieur.

19. Procédé selon les revendications 17 ou 18, dans lequel l'étape de formation des bornes d'électrode comprend le fléchissement d'une dite première languette d'électrode ayant une longueur supérieure à celle des autres premières languettes d'électrode et d'une dite deuxième languette d'électrode ayant une longueur supérieure à celle des autres deuxièmes languettes d'électrode négatives.

20. Procédé selon les revendications 17, 18 ou 19, dans lequel l'étape de formation des bornes d'électrode comprend le fléchissement d'une dite première languette d'électrode ayant une épaisseur supérieure à celle des autres premières languettes d'électrode et d'une dite deuxième languette d'électrode ayant une épaisseur supérieure à celle des autres deuxièmes languettes d'électrode.
